(19) Europäisches Patentamt European Patent Office Office européen des brevets

(11) **EP 2 911 397 A1**

(12) **EUROPEAN PATENT APPLICATION**

(43) Date of publication:
26.08.2015 Bulletin 2015/35

(51) Int Cl.:
*H04N 19/176* (2014.01)      *H04N 19/503* (2014.01)
*H04N 19/117* (2014.01)      *H04N 19/33* (2014.01)

(21) Application number: 15160628.2

(22) Date of filing: 28.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(62) Document number(s) of the earlier application(s) in
accordance with Art. 76 EPC:
12885593.9 / 2 901 692

(71) Applicant: Intel Corporation
Santa Clara, CA 95054 (US)

(72) Inventors:
• Zhang, Wenhao
100190 Beijing (CN)
• Chiu, Yi-jen
San Jose, CA California 95129 (US)
• Xu, Lidong
100190 Beijing (CN)
• Han, Yu
100190 Beijing (CN)
• Deng, Zhipin
100081 Beijing (CN)
• Cai, Xiaoxia
100190 Beijing (CN)

(74) Representative: Jansen, Cornelis Marinus
V.O.
Johan de Wittlaan 7
2517 JR Den Haag (NL)

Remarks:
This application was filed on 24-03-2015 as a
divisional application to the application mentioned
under INID code 62.

(54) **Inter-layer pixel sample prediction**

(57) Systems, devices and methods are described including performing scalable video coding using inter-layer pixel sample prediction. Inter-layer pixel sample prediction in an enhancement layer coding unit, prediction unit, or transform unit may use reconstructed pixel samples obtained from a base layer or from a lower enhancement layer. The pixel samples may be subjected to upsample filtering and/or refinement filtering. The upsample or refinement filter coefficients may be predetermined or may be adaptively determined.

FIG. 2

## Description

### BACKGROUND

High Efficiency Video Coding (HEVC), currently under development by the Joint Collaborative Team on Video Coding (JCT-VC) formed by ISO/IEC Moving Picture Expert Group (MPEG) and ITU-T Video Coding Experts Group (VCEG), is a video compression standard projected to be finalized in 2012. Similar to previous video coding standards, HEVC includes basic functional modules such as intra/inter prediction, transform, quantization, in-loop filtering, and entropy coding.

HEVC defines Coding Units (CUs) as picture sub-partitions that take the form of rectangular blocks having variable sizes. Within each CU, a quad-tree based splitting scheme specifies the CU partition pattern. HECV also defines Prediction Units (PUs) and Transform Units (TUs) that specify how a given CU is to be partitioned for prediction and transform purposes, respectively. After intra or inter prediction, transform operations are applied to residual blocks to generate coefficients. The coefficients are then quantized, scanned into one-dimensional order and, finally, entropy encoded.

HEVC is expected to include a Scalable Video Coding (SVC) extension. An HECV SVC bitstream provides several subset bitstreams representing the source video content at different spatial resolutions, frame rates, quality, bit depth, and so forth. Scalability is then achieved using a multi-layer coding structure that, in general, includes a Base Layer (BL) and at least one Enhancement Layer (EL). This permits a picture, or portions of a picture such as a CU, belonging to an EL to be predicted from lower layer pictures (e.g., a BL picture) or from previously coded pictures in the same layer. In conventional approaches, inter and/or intra prediction for a current CU is performed with respect to CUs of pictures within the same layer. For instance, pixel sample prediction for an EL CU is conventionally performed with respective to CUs of the same EL and not of another EL or of the BL.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:

FIG. 1 is an illustrative diagram of an example coding system;
FIG. 2 is an illustrative diagram of an example encoding system;
FIG. 3 is a flow diagram illustrating an example process;
FIG. 4 is an illustrative diagram of an example system;
FIG. 5 is an illustrative diagram of an example coding scheme;
FIG. 6 is an illustrative diagram of an example bitstream;
FIG. 7 is an illustrative diagram of an example decoding system;
FIG. 8 is a flow diagram illustrating an example process;
FIG. 9 is an illustrative diagram of an example system; and
FIG. 10 illustrates an example device, all arranged in accordance with at least some implementations of the present disclosure.

### DETAILED DESCRIPTION

One or more embodiments or implementations are now described with reference to the enclosed figures. While specific configurations and arrangements are discussed, it should be understood that this is done for illustrative purposes only. Persons skilled in the relevant art will recognize that other configurations and arrangements may be employed without departing from the spirit and scope of the description. It will be apparent to those skilled in the relevant art that techniques and/or arrangements described herein may also be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, smart phones, etc., may implement the techniques and/or arrangements described herein. Further, while the following description may set forth numerous specific details such as logic implementations, types and interrelationships of system components, logic partitioning/integration choices, etc., claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof. The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

References in the specification to "one implementation", "an implementation", "an example implementation", etc., indicate that the implementation described may include a particular feature, structure, or characteristic, but every embodiment may not necessarily include the particular feature, structure, or characteristic. Moreover, such phrases are not necessarily referring to the same implementation. Further, when a particular feature, structure, or characteristic is described in connection with an embodiment, it is submitted that it is within the knowledge of one skilled in the art to effect such feature, structure, or characteristic in connection with other implementations whether or not explicitly described herein.

Systems, apparatus, articles, and methods are described below including operations for video coding employing inter-layer pixel sample prediction.

As used herein, the term "coder" may refer to an encoder and/or a decoder. Similarly, as used herein, the term "coding" may refer to encoding via an encoder and/or decoding via a decoder. For example a video encoder and video decoder may both be examples of coders capable of coding. In addition, as used herein, the term "codec" may refer to any process, program or set of operations, such as, for example, any combination of software, firmware, and/or hardware, that may implement an encoder and/or a decoder.

In scalable video coding systems, multi-layered coding is used to support several kinds of scalabilities including spatial scalability, temporal scalability, quality scalability, bit-depth scalability and so forth. In accordance with the present disclosure, various inter-layer pixel sample prediction schemes may be used to increase coding efficiency and/or coding flexibility in scalable video coding systems.

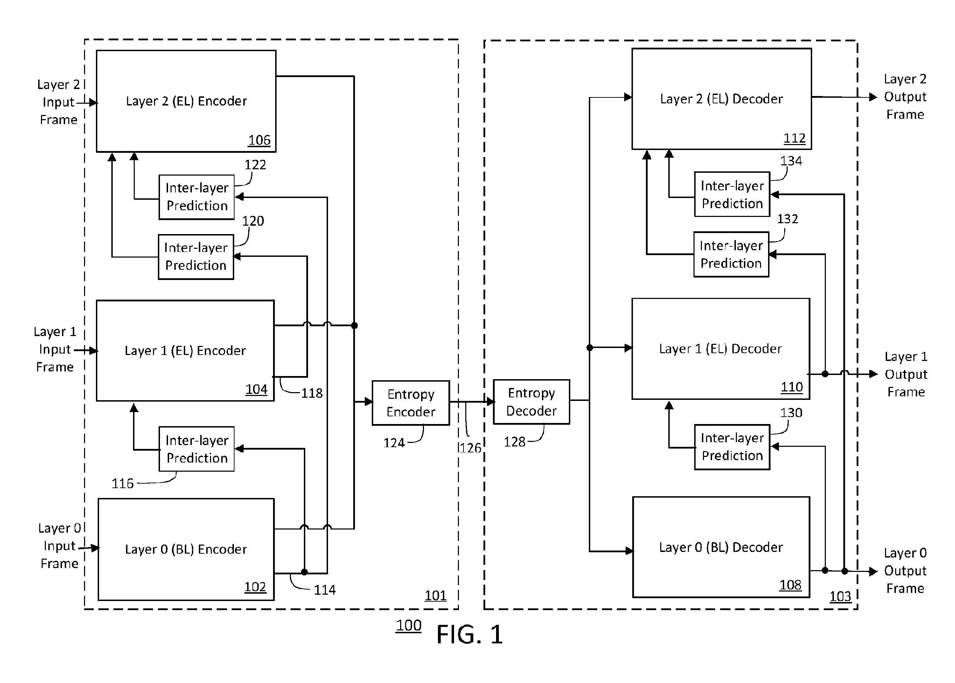

FIG. 1 illustrates an example scalable video coding (SVC) coding system 100 in accordance with the present disclosure. In various implementations, system 100 may undertake video compression and decompression and/or implement video codecs according to one or more standards or specifications, such as, for example, the High Efficiency Video Coding (HEVC) standard (see ISO/IEC JTC/SC29/WG11 and ITU-T SG16 WP3, "High efficiency video coding (HEVC) text specification draft 8" (JCTVC-J1003_d7), July 2012) and any Scalable Video Coding (SVC) extension of thereof. Although system 100 and/or other systems, schemes or processes may be described herein in the context of an SVC extension of the HEVC standard, the present disclosure is not limited to any particular video encoding standard or specification or extensions thereof.

As illustrated, system 100 includes an encoder subsystem 101 having multiple video encoders including a Layer 0 or base layer (BL) encoder 102, a Layer 1 or first enhancement layer (EL) encoder 104, and a Layer 2 or second EL encoder 106. System 100 also includes corresponding video decoders of a decoder subsystem 103 including a Layer 0 (BL) decoder 108, a Layer 1 (EL) decoder 110, and a Layer 2 (EL) decoder 112. In general, the BL may be HEVC compatible coded. When coding an EL with a layer identification (ID) equal to N, SVC coding schemes guarantee that all coding layers having a layer ID less than N are available for use in inter-layer prediction schemes so that a picture belonging to a particular EL may be predicted from lower layer pictures (e.g., in a BL or a EL having a lower layer ID) or from previously coded pictures in the same layer.

In various implementations, HEVC specifies a Largest Coding Unit (LCU) for a picture that may then be partitioned into Coding Units (CUs) that take the form of rectangular blocks having variable sizes. Within each LCU, a quad-tree based splitting scheme specifies the CU partition pattern. HECV also defines Prediction Units (PUs) and Transform Units (TUs) that specify how a given CU is to be partitioned for prediction and transform purposes, respectively. A CU ordinarily includes one luma Coding Block (CB) and two chroma CBs together with associated syntax, and a PU may be further divided into Prediction Blocks (PBs) ranging in size from 64.times.64 samples down to 4.times.4 samples. As used herein, the term "block" may refer to any partition or sub-partition of a video picture. For example, a block may refer to a PU or to a PB.

In accordance with the present disclosure, as will be explained in greater detail below, either or both of EL encoders 104 and 106 may use pixel samples obtained from either encoder 102 or 104 to perform inter-layer pixel sample prediction. For example, in some implementations, encoder 104 may perform inter-layer pixel sample prediction using pixel samples 114 obtained from encoder 102 and processed by inter-layer prediction module 116. In addition, in some implementations, encoder 106 may perform inter-layer pixel sample prediction using either pixel samples 114 or pixel samples 118 obtained, respectively, from encoder 102 or encoder 104 and processed, respectively, by inter-layer prediction module 120 or inter-layer prediction module 122.

As used herein the term "inter-layer pixel sample prediction" refers to inter prediction of an enhancement layer picture using pixel samples obtained from a reference layer picture Further, as used herein, "pixel samples" refers to reconstructed pixels. By reusing coding information such as pixel samples reconstructed by a reference layer, inter-layer pixel prediction may improve the compression efficiency and coding flexibility of an SVC system, such as system 100, and/or a codec design. In various implementations in accordance with the present disclosure, inter-layer pixel sample prediction may be applied in any combination of temporal, spatial and/or quality scalable video coding applications.

Employing any one or more of inter-layer prediction modules 116, 120 and/or 122, encoders 102, 104 and 106 may provide separate bitstreams to an entropy encoder 124. Entropy encoder 124 may then provide a compressed bitstream 126, including multiple layers of scalable video content, to an entropy decoder 128 of decoder subsystem 103. In accordance with the present disclosure, as will also be explained in greater detail below, either or both of EL decoders 110 and 112 may use pixel samples obtained from either decoder 108 or 110 to perform inter-layer pixel sample prediction. For example, in some implementations decoder 110 may perform inter-layer pixel sample prediction using pixel samples obtained from decoder 108 and processed by inter-layer prediction module 130. In addition, in some implementations, decoder 112 may perform inter-layer pixel sample prediction using pixel samples obtained, respectively, from either decoder 108 or decoder 110 and processed, respectively, by inter-layer prediction module 132 or inter-layer prediction module 134.

While FIG. 1 illustrates system 100 as employing three layers of scalable video content and corresponding sets of three encoders in subsystem 101 and three decoders in subsystem 103, any number of scalable video coding layers and corresponding encoders and decoders may be utilized in accordance with the present disclosure. Further, while system 100 depicts certain components the present disclosure is not limited to the particular components illustrated in FIG. 1 and/or to the manner in which the various components of system 100 are arranged. For instance, in various implementations, some elements of system 100 such as, for example, inter-layer prediction modules 116, 120 and 122 of encoder subsystem 101 may be implemented by a single inter-layer prediction module coupled to all three of encoders 102, 104, and 106, and so forth.

Further, it may be recognized that encoder subsystem 101 may be associated with a content provider system including, for example, a server system and that bitstream 126 may be transmitted or conveyed to decoder subsystem 103 by various communications components or systems such as transceivers, antennae, network systems and the like not depicted in FIG. 1. It may also be recognized that decoder subsystem 103 may be associated with a client system such as a computing device (e.g., a computer, smart phone or the like) that receives bitstream 126 via various communications components or systems such as transceivers, antennae, network systems and the like also not depicted in FIG. 1.

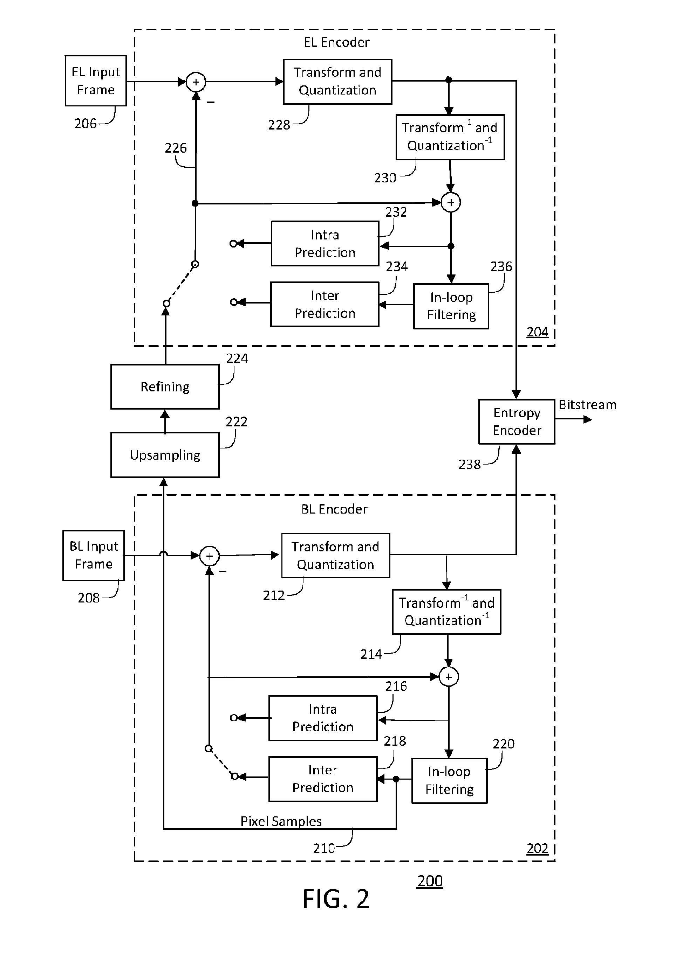

FIG. 2 illustrates an example SVC encoding system 200 in accordance with the present disclosure. System 200 includes a reference BL encoder 202 and a target EL. encoder 204 that may correspond, for example, to encoder 102 and encoder 104, respectively, of system 100. While system 200 includes only two encoders 202 and 204 corresponding to two SVC coding layers, any number of SVC coding layers and corresponding encoders may be utilized in accordance with the present disclosure in addition to those depicted in FIG. 2. For example, additional encoders corresponding to additional enhancement layers may be included in system 200 and may interact with the BL encoder 202 in a similar manner to that to be described below with respect to EL encoder 204.

When employing system 200 to undertake SVC coding, various blocks of a picture or image frame in the enhancement layer, such as EL input frame 206, may be predicted by EL encoder 204 from a picture such as BL input frame 208 as processed by BL encoder 202 or from other pictures in the same enhancement layer that were previously encoded by EL encoder 204. As will be described in greater detail below, when undertaking inter-layer pixel sample prediction operations using system 200, pixels of pictures in layer 204, such as EL input frame 206, may be predicted using pixel samples 210 provided by BL encoder 202. As noted above, EL input frame 206 may be coded in units corresponding to one or more blocks of pixel values and that the blocks to be coded may be in the form of CUs, PUs or TUs. Further, the coding may be applied at a slice, picture, or layer level.

Pixel samples 210 used for inter-layer pixel sample prediction may be obtained from the processing of BL input frame 208 using a coding loop that includes a transform and quantization module 212, an inverse transform and quantization module 214, an intra prediction module 216, an inter prediction module 218, and an in-loop filtering module 220. In particular, when operating BL encoder 202 to perform inter prediction using inter prediction module 218, pixel samples 210 may be obtained from the output of in-loop filtering module 220. The functionality of modules 212, 214, 216, 218 and 220 are well recognized in the art and will not be described in any greater detail herein.

As will be described in greater detail below, in some implementations, pixel samples 210 may be processed by an upsampling module 222 and/or a refining module 224 before being supplied to EL encoder 204. In various implementations, upsampling module 222 and refining module 224 may be components of an inter-layer prediction module (e.g., inter-layer prediction module 116 of system 100). Further, in various implementations, at least portions of upsampling module 222 and refining module 224 may be provided by hardware logic such as fixed function circuitry.

At EL encoder 204, filtered pixel samples 226 provided by refining module 224 may be used to predict pixel samples in EL input frame 206 using a coding loop that includes a transform and quantization module 228 and an inverse transform and inverse quantization module 230. When operated to undertake inter-layer pixel sample prediction of EL input frame 206, EL encoder 204 may not employ any of intra prediction module 232, inter prediction module 234, or in-loop filtering module 236 in the coding loop used to compress EL input frame 206. Again, the functionality of modules 228, 232, 234, and 236 are well recognized in the art and will not be described in any greater detail herein. EL encoder 204 may then use the filtered pixel samples 226 to predict various pixels in various CUs of EL input frame 206.

In various implementations either or both of BL encoder 202 and EL encoder 204 may provide compressed coefficients corresponding to coded residuals of at least some of BL input frame 208 and of at least some of EL input frame 206, respectively, to an entropy encoder module 238. Module 238 may then perform lossless compression of the residuals and provide a multiplexed SVC bitstream included the encoded residuals as output from system 200. In other implementations, either or both of BL encoder 202 and EL encoder 204 may not provide coded residuals of at least some of BL input frame 208 and of at least some of EL input frame 206, respectively, to entropy encoder module 238.

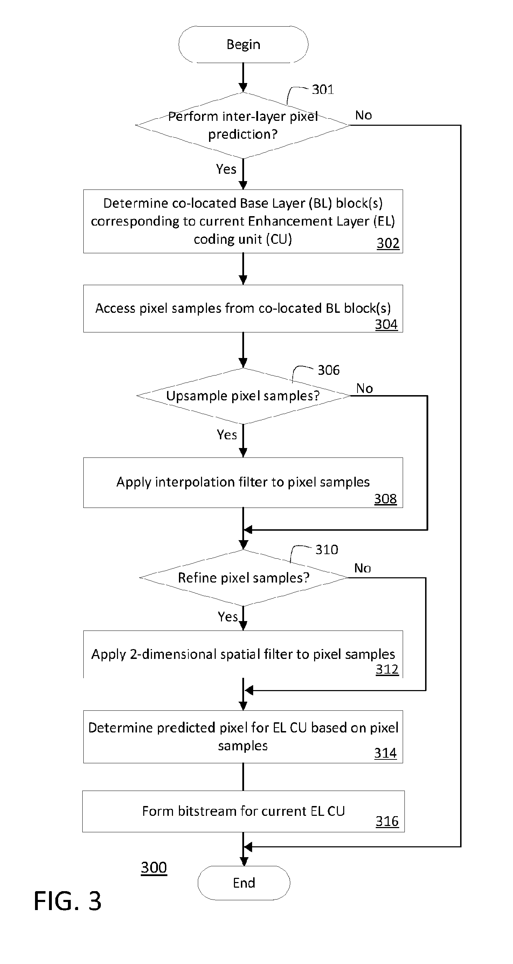

FIG. 3 illustrates a flow diagram of an example process 300 according to various implementations of the present disclosure. Process 300 may include one or more operations, functions or actions as illustrated by one or more of blocks 301, 302, 304, 306, 308, 310, 312, 314 and 316 of FIG. 3. By way of non-limiting example, process 300 may form at least part of a scalable video coding process for a portion of an EL layer (e.g., a CU in this implementation) as undertaken by encoder system 200.

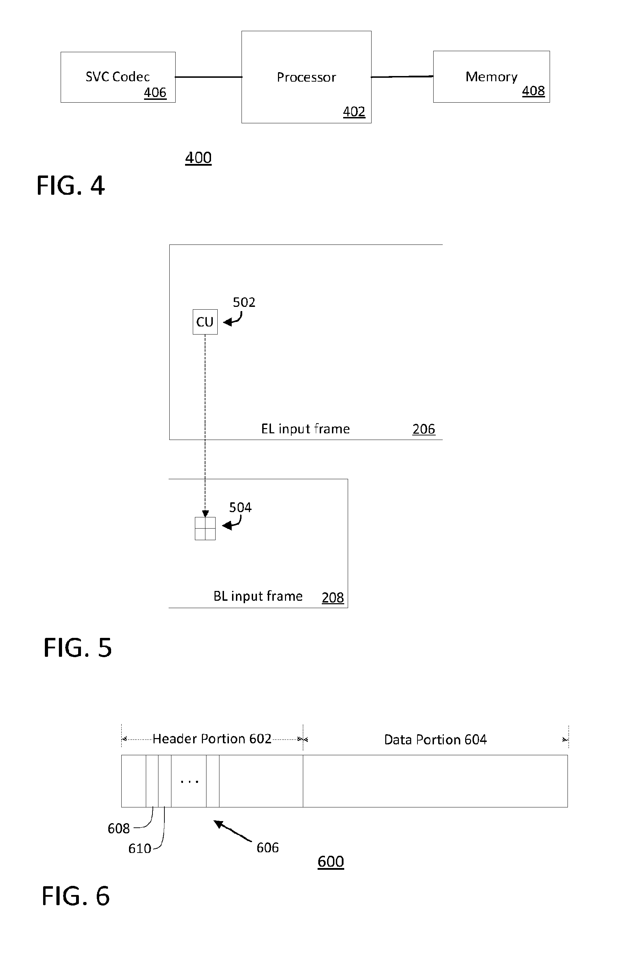

Further, process 300 will also be described herein in reference to coding an enhancement layer CU using the scalable video coding system 400 of FIG. 4 where system 400 includes processor 402, SVC codec module 406, and memory 408. Processor 402 may instantiate SVC codec module 406 to provide for inter-layer pixel sample prediction in accordance with the present disclosure. In the example of system 400, memory 408 may store video content including at least some of BL input frame 208 and/or at least some of EL input frame 206, as well as other items such as filter coefficients and the like as will be explained in greater detail below. SVC codec module 406 may be provided by any combination of software logic, firmware logic, and/or hardware logic suitable for implementing coding system 200. Memory 408 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory 408 may be implemented by cache memory.

Process 300 may begin at block 301 where a determination may be made regarding whether inter-layer pixel prediction should be performed for a current EL CU. In various implementations, the determination of whether to perform inter-layer pixel prediction may be based on rate-distortion cost. For example, SVC codec 406 may determine whether to perform inter-layer pixel prediction for EL CU 502 based on known rate-distortion cost techniques. If inter-layer pixel prediction is to be performed then process 300 may continue at block 302, if, however, inter-layer pixel prediction is not to be performed, then process 300 may end.

Process 300 may continue at block 302 where, for a current EL CU, one or more co-located blocks of a BL corresponding to the EL CU may be determined. For example, FIG. 5 illustrates a current CU 502 of EL input frame 206 where CU 502 corresponds spatially to co-located blocks 504 of BL input frame 208. In this example, CU 502 corresponds to four co-located blocks 504 of BL input frame 208. However, in various implementations, depending on the spatial scaling between an EL and a BL or lower level EL, any number of BL or lower level EL blocks may be co-located with respect to a particular EL CU. In other implementations, only a portion of a BL or lower level EL block may be co-located with an EL CU. Further, in some scalable video coding implementations where spatial scaling is not applied so that the EL and lower EL or BL have a spatial ratio of one (e.g., when quality scaling is applied between layers without spatial scaling) there may be a one-to-one correspondence between blocks in an EL and blocks in a lower EL or in a BL.

With respect to the example of FIG. 5, determining co-located blocks at block 302 may involve marking or otherwise labeling blocks 504 as being co-located with respect to the current EL CU 502. Further, in various implementations, the co-located blocks in the BL or lower EL layer may be intra coded, inter coded, and/or may be hybrid intra/inter coded. In addition, different blocks in a set of co-located blocks may have different coding. For instance, in a non-limiting example, co-located blocks 504 may have mixed coding modes so that two of the co-located blocks may be intra coded, one of the co-located blocks may be inter coded, and the remaining co-located block may be hybrid intra/inter coded.

Process 300 may continue at block 304 where pixel samples corresponding to the co-located blocks may be accessed. For instance, referring to FIGS. 4 and 5, block 304 may involve SVC codec 406 using processor 402 to obtain, from memory 408, pixel samples corresponding to co-located blocks 504. For instance, memory 408 may act as a frame buffer for temporarily storing video content such as the portions of BL input frame 208 corresponding to reconstructed pixel values of blocks 504.

At block 306 a determination may be made with regard to performing upsampling of the pixel samples obtained at block 304. For instance, in the example of FIG. 5 where CU 502 corresponds to four co-located blocks 504, the pixel samples corresponding to blocks 504 may need to be upsampled to match the size of CU 502 and process 300 may proceed to block 308. In other implementations, such as when spatial scalability is not provided, upsampling may not be performed and process 300 may skip from block 306 to block 310 so that block 308 may not be performed.

In various implementations, upsampling of the pixels at block 308 may be performed by applying an interpolation filter to the pixel samples although the present disclosure is not limited to any particular form of upsample filtering. In various implementations, upsampling the pixel samples may improve the accuracy of inter-layer pixel prediction and may result in better compression performance for an EL. In various implementations, a fixed interpolation filter or an adaptive interpolation filter may be applied at block 308. For implementations employing a fixed upsampling filter, the filter coefficients may be predetermined and may be used by both an encoder (e.g., system 200) and a decoder (to be described in greater detail below). For implementations employing an adaptive upsampling filter, the filter coefficients may be adaptively determined (e.g., by training) at the encoder and then may be sent to the decoder as part of a bitstream as will be explained further below. In various implementations, the interpolation tilter applied at block 308 may be a multi-tap poly-phase interpolation filter. Further, in various implementations, block 308 may involve SVC codec 406 using hardware logic, such as fixed function circuitry, in processor 402 to apply interpolation filter coefficients obtained from memory 408 to the pixel samples.

Process 300 may continue at block 310 where a determination may be made with regard to refining either the pixel samples obtained at block 304 or the upsampled pixels resulting from block 308. In various implementations, applying a refining filter to the pixel samples may improve the accuracy of inter-layer pixel prediction and may result in better compression performance for an EL. If refining is chosen, process 300 may, in some implementations, proceed to block 312 where a 2-dimensional (2D) spatial filter may be applied as a refining filter although the present disclosure is not limited to any particular type of refining filter. In other implementations, spatial filtering may not be performed and process 300 may skip from block 310 to block 314 so that block 312 may not be performed. Further, in various implementations, block 312 may involve SVC codec 406 using hardware logic, such as fixed function circuitry, in processor 402 to apply refining filter coefficients obtained from memory 408 to the pixel samples.

In various implementations, if $p$ represents a center pixel before filtering, and surrounding pixels $q_{i,j}$ (i, j=0, ... , N) represent the 2D filter window, the refining filter applied at block 312 may determine a corresponding filtered center pixel p' according to the following formula:

$$ p' = \sum_{i,j=0}^{N} q_{i,j} \times a_{i,j} + b $$

where $a_{i,j}$ (i,j=0, ... , N) are filter coefficients and $b$ is an offset factor.

In various implementations the filter coefficients $a_{i,j}$ may be fixed or may be adaptive. In implementations where the filter coefficients are fixed the filter coefficients $a_{i,j}$ and the offset factor $b$ may be predetermined and employed by both the encoder and the decoder. In implementations where the filter coefficients are adaptive the filter coefficients $a_{i,j}$ and the offset factor $b$ may be adaptively determined (e.g., by training) at the encoder and then may be sent to the decoder as part of a bitstream as will be explained further below.

Referring to system 400, in various implementations the application of filters at blocks 308 and 312 may be undertaken by SVC codec 406 using processor 402 to obtain filter coefficients from memory 408. In adaptive filter implementations, SVC codec 406 may use processor 402 to adaptively determine filter coefficients that may, or may not, be stored in memory 408.

Process 300 may continue at block 314 where the pixel samples may be used to determine a predicted pixel for the current EL CU. For instance, SVC codec 406 may use the pixel samples obtained at block 304 and that may be filtered at block 308 and/or at block 310 to form a prediction signal for CU 502. In various implementations, block 314 may also involve the generation of a residual for the current EL CU. For instance, SVC codec 406 may generate a residual corresponding to the difference between the pixel samples (filtered or otherwise) obtained from block 504 and the pixel values of CU 502. In other implementations, block 314 may not involve the generation of a residual for the current EL CU. In various implementations, block 314 may be undertaken using hardware logic, such as fixed function circuitry, to perform the arithmetic operations needed to determine the predicted pixel. Moreover, such hardware logic may permit parallel determination of predicted pixels for various portions of the current PU and/or for multiple PUs. As used herein, a "predicted pixel" may refer to the value of a pixel sample in the current PU that may be predicted based on one or more pixel samples obtained from one or more PUs of one or more lower layers.

Process 300 may conclude at block 316 where a bitstream may be formed for the current EL CU. In various implementations, block 316 may involve forming a bitstream portion corresponding to the current EL CU where the bitstream portion includes a header portion and a data portion where the data portion may or may not include a compressed residual for the current EL CU. In various implementations, the header portion may include one or more indicators (such as one or more flags) to indicate whether or not to perform inter-layer pixel prediction for a current EL CU and/or to indicate whether or not a residual exists for the current CU.

Further, in various implementations, filter coefficients corresponding to either the upsampling filter coefficients of block 308 or the refining filter coefficients of block 312 may be either indicated in or may be included in the bitstream formed at block 316. For example, if adaptive filter coefficients are employed at either of blocks 308 or 312, the filter coefficient values may be included in either the header portion or the data portion of the bitstream formed at block 316. In other implementations, if predetermined filter coefficients are employed at either of blocks 308 or 312, the filter coefficients employed may be indicated, for example, in the header portion of the bitstream formed at block 316.

FIG. 6 illustrates an example bitstream portion 600 corresponding to an EL CU in accordance with various implementations of the present disclosure. Portion 600 includes a header portion 602 and a data portion 604. Header portion 602 includes one or more indicators 606. For instance, indicators 606 may include an indicator 608 whose value specifies whether or not to perform inter-layer pixel prediction for the EL CU. Indicators 606 may or may not also include an indicator 610 whose value specifies whether or not a residual exists for the EL CU. For example, in one implementation, indicator 608 may be labeled as a "inter_layer_pixel_prediction_flag" and may be added to the CU syntax table to indicate whether or not the current CU (e.g., CU 502) uses inter-layer pixel prediction. Further, when inter_layer_pixel_prediction_flag has a particular value (e.g., is equal to one), bitstream header portion 602 may subsequently include indicator 610 which may be labeled as a "inter_layer_residual_flag" and which may indicate whether or not a residual exists for the current CU.

In various implementations, indicators 608 and 610 may be used to specify two scalable video coding modes in accordance with the present disclosure: an inter-layer skip mode in which inter-layer pixel prediction is used without a residual; and an inter-layer direct mode where inter-layer pixel prediction is used along with a residual. Thus, in an inter-layer skip mode. SVC codec 406 may not transmit a residual in the data portion 604 of bitstream 600. Conversely, in an inter-layer direct mode, SVC codec 406 may transmit a residual in the data portion 604 of bitstream 600.

While process 300 has been described herein in the context of FIG. 5, the present disclosure is not limited to the performance of inter-layer pixel prediction in which all pixels of an EL CU are predicted from samples derived from the same co-located BL blocks. Thus, in various implementations, a portion of a CU (e.g., only some blocks of a CU) may be predicted with respect to only some of the co-located blocks while another portion of the CU may be predicted with respect to others of the co-located blocks. For example, for a CU that corresponds to four co-located BL blocks, a first, upper portion of the CU may be predicted based on the two upper, horizontally adjacent co-located BL blocks, while a second, lower portion of the CU may be predicted based on the two lower, horizontally adjacent co-located BL blocks.

Further, in various implementations, different portions of a CU may be predicted from different co-located BL blocks having different coding. Continuing the example from above, the two upper, horizontally adjacent co-located BL blocks may have been intra coded, while the two lower, horizontally adjacent co-located BL blocks may have been inter coded.

Thus, the first portion of the CU may be predicted from intra coded pixel samples, while the second portion of the CU may be predicted from inter coded pixel samples.

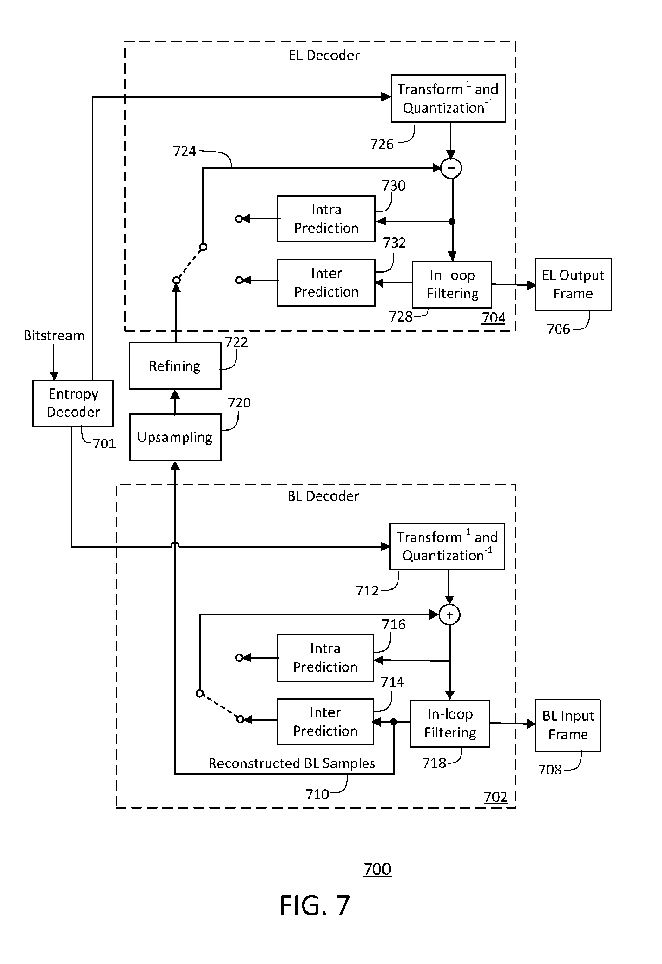

FIG. 7 illustrates an example SVC decoding system 700 in accordance with the present disclosure. System 700 includes a reference BL decoder 702 and a target EL encoder 704 that may correspond, for example, to decoder 108 and decoder 110. respectively, of system 100. While system 700 includes only two decoders 702 and 704 corresponding to two SVC coding layers, any number of SVC coding layers and corresponding decoders may be utilized in accordance with the present disclosure in addition to those depicted in FIG. 7. For example, additional decoders corresponding to additional enhancement layers may be included in system 700 and may interact with the BL decoder 702 in a similar manner to that to be described below with respect to EL. decoder 704.

When employing system 700 to undertake SVC coding, a picture or image frame in the enhancement layer, such as EL output frame 706, may be inter predicted by EL decoder 704 from a picture such as BL output frame 708 as processed by BL decoder 702 or from other pictures in the same enhancement layer that were previously encoded by EL decoder 704. As will be described in greater detail below, when undertaking inter-layer pixel sample prediction operations using system 700, pixels of pictures in layer 704, such as EL output frame 706, may be predicted using reconstructed BL pixel samples 710 provided by BL decoder 702. Samples 710 may be obtained using an inverse transform and quantization module 712, an inter prediction module 714, and an in-loop filtering module 718. In particular, when operating BL decoder 702 to perform inter prediction using inter prediction module 714, samples 710 may be obtained from the output of in-loop filtering module 718.

As described in greater detail below, the reconstructed pixel samples 710 may be processed by an upsampling module 720 and a refining module 722 before being supplied to EL decoder 704. In various implementations, upsampling module 720 and refining module 722 may be components of an inter-layer prediction module (e.g., inter-layer prediction module 130 of system 100). At EL decoder 704, filtered pixel samples 724 provided by refining module 322 may be used to predict pixel samples in EL output frame 706 in combination with an inverse transform and quantization module 726 and an in-loop filtering module 728. When operated to undertake inter-layer pixel sample prediction of EL output frame 706, EL decoder 704 may not employ either of an intra prediction module 730 or an inter prediction module 732. EL decoder 704 may then use the filtered pixel samples 724 to predict various pixels in various CUs of EL output frame 706.

Various components of the systems described herein may be implemented in software logic, firmware logic, and/or hardware logic and/or any combination thereof. For example, various components of system 700 may be provided, at least in part, by hardware of a computing System-on-a-Chip (SoC) such as may be found in a computing system such as, for example, a smart phone. Those skilled in the art may recognize that systems described herein may include additional components that have not been depicted in the corresponding figures. For example, systems 200 and 700 may include additional components such as bitstream multiplexer modules and the like that have not been depicted in FIGS. 2 and 7 in the interest of clarity.

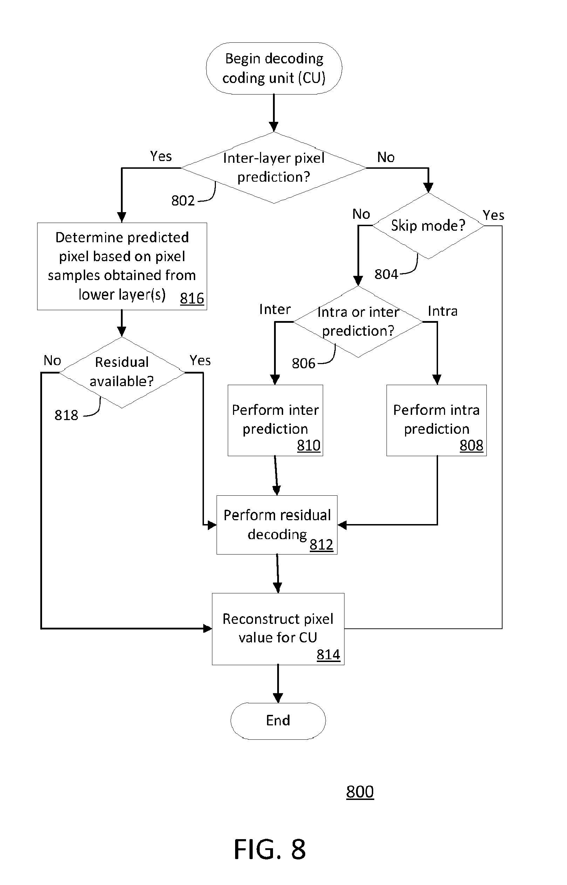

FIG. 8 illustrates a flow diagram of an example process 800 according to various implementations of the present disclosure. Process 800 may include one or more operations, functions or actions as illustrated by one or more of blocks 802, 804, 806, 808, 810, 812, 814. 816 and 818 of FIG. 8. By way of non-limiting example, process 800 may form at least part of a scalable video coding process for a portion of an EL layer (e.g., a CU in this implementation) as undertaken by decoder system 700. Further, process 800 will also be described herein in reference to coding an enhancement layer CU using the scalable video coding system 400 of FIG. 4 where SVC codec module 406 may instantiate decoder system 700, and to example bitstream 600 of FIG. 6.

Process 800 may begin at block 802 where a determination may be made as to whether to perform inter-layer pixel prediction for the current CU. In various implementations, SVC codec 406 may undertake block 802 in response to the value of indicator 608 received in header portion 602 of bitstream 600. For instance, if indicator 608 has a first value (e.g., one) then SVC codec 406 may determine to undertake inter-layer pixel sample prediction for the current CU. If, on the other hand, indicator 608 has a second value (e.g., zero) then SVC codec 406 may determine to not undertake inter-layer pixel sample prediction for the current CU.

If block 802 results in a negative determination then process 800 may proceed to block 804 where a determination may be made regarding whether to apply a skip mode in which the current CU would be decoded based on one or more previously decoded CUs. If skip mode is invoked at block 804 then process 800 may proceed to block 814 where, for skip mode implementations, pixel values for the current CU may be reconstructed based on one or more previously decoded CUs.

If, on the other hand, skip mode is not invoked at block 804 then process 800 may proceed to block 806 where a determination may be made regarding whether to perform intra or inter prediction for the CU. If intra prediction is chosen then process 800 may proceed to block 808 where intra prediction may be performed using known intra-layer intra prediction techniques. If inter prediction is chosen then process 800 may proceed to block 810 where inter prediction may be performed using known intra-layer inter prediction techniques. In various implementations, SVC codec 406 may undertake blocks 804, 806, 808 and 810 using, for example, intra prediction module 730 of decoder 704 to undertake block 808, and inter prediction module 732 of decoder 704 to undertake block 810.

Process 800 may continue at block 812 where residual decoding may be undertaken using known residual decoding techniques and the results of either block 808 or 810. Process 800 may then conclude at block 814 where the CU pixel values may be reconstructed using known techniques and the results of block 812.

Returning to discussion of block 802, if block 802 results in a positive determination then process 800 may proceed to block 816 where a predicted pixel may be determined based on pixel samples obtained from lower layer(s) in a manner similar to that described above with respect to process 300. In various implementations, SVC codec 406 may undertake block 816 in response to indicator 608 having a first value (e.g., one). SVC codec 406 may then, for example, obtain pixel samples corresponding to co-located lower EL and/or BL blocks, may or may not apply upsample filtering to the pixel samples, and may or may not also apply a refining filter to the pixel samples. Further, when undertaking upsample filtering and/or refinement filtering of reconstructed pixel samples. SVC codec 406 may do so using filter coefficients either indicated by or transmitted in bitstream 600.

Process 800 may continue at block 818 where a determination may be made regarding whether a residual is available for the CU. In various implementations, a bitstream associated with the CU and received by a decoder may include an indicator specifying whether or not the bitstream includes a residual for the CU. For example, SVC codec 406 may undertake block 818 in response to the value of indicator 610 in bitstream 600. For instance, if indicator 610 has a first value (e.g., one) then an inter-layer direct mode may be invoked in which inter-layer pixel prediction is used along with a residual to reconstruct the CU pixel values and process 800 may proceed to block 812 and thence to block 814. Otherwise, if indicator 610 has a second value (e.g., zero) then an inter-layer skip mode may be invoked where inter-layer pixel prediction is used without a residual to reconstruct the CU pixel values and process 800 may proceed directly to block 814 without invoking block 812.

While process 800 is described herein as a decoding process for an EL CU, the present disclosure is not limited to the performance of inter-layer pixel sample prediction at the CU level. Thus, in various implementations, process 800 may also be applied to an EL PU or to an EL TU. Further, as noted previously, all inter-layer pixel sample prediction processes described herein including process 800 may be applied in the context of any combination of temporal, spatial, and/or quality scalable video coding.

While implementation of example processes 300 and 800, as illustrated in FIGS. 3 and 8, may include the undertaking of all blocks shown in the order illustrated, the present disclosure is not limited in this regard and, in various examples, implementation of processes 300 and 800 may include the undertaking of only a subset of the blocks shown and/or in a different order than illustrated.

In addition, any one or more of the blocks of FIGS. 3 and 8 may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more processor core(s) may undertake one or more of the blocks shown in FIGS. 3 and 8 in response to program code and/or instructions or instruction sets conveyed to the processor by one or more machine-readable media. In general, a machine-readable medium may convey software in the form of program code and/or instructions or instruction sets that may cause any of the devices and/or systems described herein to implement at least portions of video systems 100, 200, and 700 and/or SVC codec module 406.

As used in any implementation described herein, the term "module" refers to any combination of software, firmware and/or hardware configured to provide the functionality described herein. The software may be embodied as a software package, code and/or instruction set or instructions. and "hardware", as used in any implementation described herein. may include, for example, singly or in any combination, hardwired circuitry, programmable circuitry, state machine circuitry, and/or firmware that stores instructions executed by programmable circuitry. The modules may, collectively or individually, be embodied as circuitry that forms part of a larger system, for example, an integrated circuit (IC), system on-chip (SoC), and so forth.

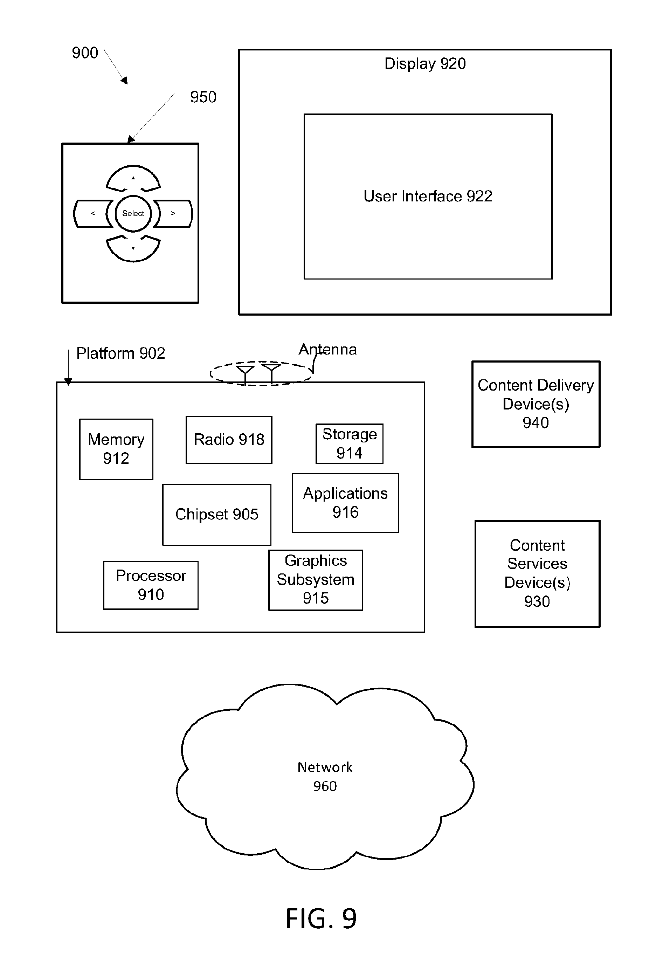

FIG. 9 illustrates an example system 900 in accordance with the present disclosure. In various implementations, system 900 may be a media system although system 900 is not limited to this context. For example, system 900 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, cameras (e.g. point-and-shoot cameras, super-zoom cameras, digital single-lens reflex (DSLR) cameras), and so forth.

In various implementations, system 900 includes a platform 902 coupled to a display 920. Platform 902 may receive content from a content device such as content services device(s) 930 or content delivery device(s) 940 or other similar content sources. A navigation controller 950 including one or more navigation features may be used to interact with, for example, platform 902 and/or display 920. Each of these components is described in greater detail below.

In various implementations, platform 902 may include any combination of a chipset 905, processor 910, memory 912, storage 914, graphics subsystem 915, applications 916 and/or radio 918. Chipset 905 may provide intercommunication among processor 910, memory 912, storage 914, graphics subsystem 915, applications 916 and/or radio 918. For example, chipset 905 may include a storage adapter (not depicted) capable of providing intercommunication with storage 914.

Processor 910 may be implemented as a Complex Instruction Set Computer (CISC) or Reduced Instruction Set Computer (RISC) processors, x86 instruction set compatible processors, multi-core, or any other microprocessor or central processing unit (CPU). In various implementations, processor 910 may be dual-core processor(s), dual-core mobile processor(s), and so forth.

Memory 912 may be implemented as a volatile memory device such as, but not limited to, a Random Access Memory (RAM), Dynamic Random Access Memory (DRAM), or Static RAM (SRAM).

Storage 914 may be implemented as a non-volatile storage device such as, but not limited to, a magnetic disk drive, optical disk drive, tape drive, an internal storage device, an attached storage device, flash memory, battery backed-up SDRAM (synchronous DRAM). and/or a network accessible storage device. In various implementations, storage 914 may include technology to increase the storage performance enhanced protection for valuable digital media when multiple hard drives are included, for example.

Graphics subsystem 915 may perform processing of images such as still or video for display. Graphics subsystem 915 may be a graphics processing unit (GPU) or a visual processing unit (VPU), for example. An analog or digital interface may be used to communicatively couple graphics subsystem 915 and display 920. For example, the interface may be any of a High-Definition Multimedia Interface, DisplayPort, wireless HDMI, and/or wireless HD compliant techniques. Graphics subsystem 915 may be integrated into processor 910 or chipset 905. In some implementations, graphics subsystem 915 may be a stand-alone device communicatively coupled to chipset 905.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In a further embodiments, the functions may be implemented in a consumer electronics device.

Radio 918 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 918 may operate in accordance with one or more applicable standards in any version.

In various implementations, display 920 may include any television type monitor or display. Display 920 may include, for example, a computer display screen, touch screen display, video monitor, television-like device, and/or a television. Display 920 may be digital and/or analog. In various implementations, display 920 may be a holographic display. Also, display 920 may be a transparent surface that may receive a visual projection. Such projections may convey various forms of information, images, and/or objects. For example, such projections may be a visual overlay for a mobile augmented reality (MAR) application. Under the control of one or more software applications 916. platform 902 may display user interface 922 on display 920.

In various implementations, content services device(s) 930 may be hosted by any national, international and/or independent service and thus accessible to platform 902 via the Internet, for example. Content services device(s) 930 may be coupled to platform 902 and/or to display 920. Platform 902 and/or content services device(s) 930 may be coupled to a network 960 to communicate (e.g., send and/or receive) media information to and from network 960. Content delivery device(s) 940 also may be coupled to platform 902 and/or to display 920.

In various implementations, content services device(s) 930 may include a cable television box, personal computer, network, telephone, Internet enabled devices or appliance capable of delivering digital information and/or content, and any other similar device capable of unidirectionally or bidirectionally communicating content between content providers and platform 902 and/display 920, via network 960 or directly. It will be appreciated that the content may be communicated unidirectionally and/or bidirectionally to and from any one of the components in system 900 and a content provider via network 960. Examples of content may include any media information including, for example, video, music, medical and gaming information, and so forth.

Content services device(s) 930 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 902 may receive control signals from navigation controller 950 having one or more navigation features. The navigation features of controller 950 may be used to interact with user interface 922, for example. In various embodiments, navigation controller 950 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 950 may be replicated on a display (e.g., display 920) by movements of a pointer, cursor, focus ring, or other visual indicators displayed on the display. For example, under the control of software applications 916, the navigation features located on navigation controller 950 may be mapped to virtual navigation features displayed on user interface 922, for example. In various embodiments, controller 950 may not be a separate component but may be integrated into platform 902 and/or display 920.

The present disclosure, however, is not limited to the elements or in the context shown or described herein.

In various implementations, drivers (not shown) may include technology to enable users to instantly turn on and off platform 902 like a television with the touch of a button after initial boot-up, when enabled, for example. Program logic may allow platform 902 to stream content to media adaptors or other content services device(s) 930 or content delivery device(s) 940 even when the platform is turned "off" In addition, chipset 905 may include hardware and/or software support for 5.1 surround sound audio and/or high definition 7.1 surround sound audio, for example. Drivers may include a graphics driver for integrated graphics platforms. In various embodiments, the graphics driver may comprise a peripheral component interconnect (PCI) Express graphics card.

In various implementations, any one or more of the components shown in system 900 may be integrated. For example, platform 902 and content services device(s) 930 may be integrated, or platform 902 and content delivery device(s) 940 may be integrated, or platform 902, content services device(s) 930, and content delivery device(s) 940 may be integrated, for example. In various embodiments, platform 902 and display 920 may be an integrated unit. Display 920 and content service device(s) 930 may be integrated, or display 920 and content delivery device(s) 940 may be integrated, for example. These examples are not meant to limit the present disclosure.

In various embodiments, system 900 may be implemented as a wireless system, a wired system, or a combination of both. When implemented as a wireless system, system 900 may include components and interfaces suitable for communicating over a wireless shared media, such as one or more antennas, transmitters, receivers, transceivers, amplifiers, filters, control logic, and so forth. An example of wireless shared media may include portions of a wireless spectrum. such as the RF spectrum and so forth. When implemented as a wired system, system 900 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 902 may establish one or more logical or physical channels to communicate information. The information may include media information and control information. Media information may refer to any data representing content meant for a user. Examples of content may include, for example, data from a voice conversation, videoconference. streaming video, electronic mail ("email") message, voice mail message, alphanumeric symbols. graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in FIG. 9.

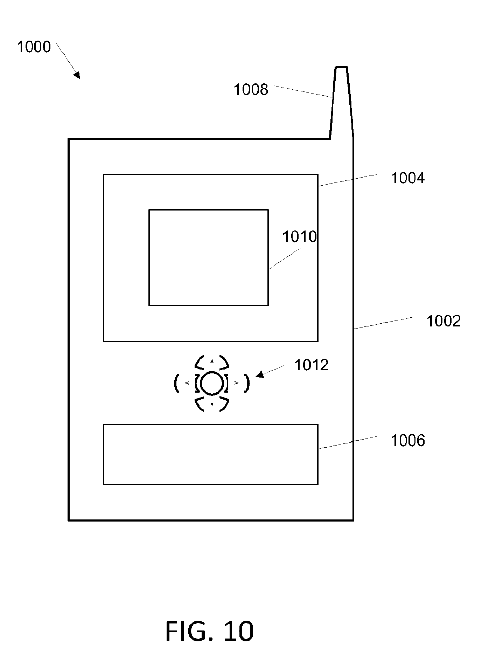

As described above, system 900 may be embodied in varying physical styles or form factors. FIG. 10 illustrates implementations of a small form factor device 1000 in which system 1000 may be embodied. In various embodiments, for example. device 1000 may be implemented as a mobile computing device a having wireless capabilities. A mobile computing device may refer to any device having a processing system and a mobile power source or supply. such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, cameras (e.g. point-and-shoot cameras, super-zoom cameras, digital single-lens reflex (DSLR) cameras), and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in FIG. 10, device 1000 may include a housing 1002, a display 1004, an input/output (I/O) device 1006, and an antenna 1008. Device 1000 also may include navigation features 1012. Display 1004 may include any suitable display unit for displaying information appropriate for a mobile computing device. I/O device 1006 may include any suitable I/O device for entering information into a mobile computing device. Examples for I/O device 1006 may include an alphanumeric keyboard, a numeric keypad, a touch pad, input keys, buttons, switches, rocker switches, microphones, speakers, voice recognition device and software, and so forth. Information also may be entered into device 1000 by way of microphone (not shown). Such information may be digitized by a voice recognition device (not shown). The embodiments are not limited in this context.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

In accordance with the present disclosure, a pixel sample obtained from a base layer video frame may be accessed at an enhancement layer video decoder and inter-layer pixel prediction of at least a portion of an enhancement layer frame may be performed in response, at least in part, to the pixel sample. Performing inter-layer pixel prediction may include performing inter-layer pixel prediction in response, at least in part, to the pixel sample and to a residual.

In accordance with the present disclosure, the enhancement layer frame may be at least one of a temporal, spatial or quality enhancement layer frame. Performing inter-layer pixel prediction may include performing inter-layer pixel prediction on at least one of a slice, a picture, or a layer level. The enhancement layer frame portion may be one of a Coding Unit (CU), Prediction Unit (PU), or a Transform Unit (TU).

In accordance with the present disclosure, performing inter-layer pixel prediction may include performing inter-layer pixel prediction in response to an indicator included in a bitstream received at the enhancement layer video decoder. In a first state, the indicator may specify that the enhancement layer video decoder is to perform inter-layer pixel prediction, and, in a second state, the indicator may specify that the enhancement layer video decoder is to not to perform inter-layer pixel prediction. The indicator may be placed in one of the first state or the second state in response to a rate-distortion cost. The portion of the enhancement layer frame may include one or more blocks of the enhancement layer frame, and the pixel sample may correspond to one or more co-located blocks of a base layer frame. Co-located blocks of the base layer frame may be intra coded blocks, inter coded blocks, or hybrid intra/inter coded blocks.

In accordance with the present disclosure, an upsample filter may be applied to the pixel sample prior to performing inter-layer pixel prediction. The upsample filter may have fixed upsample coefficients or may have adaptive upsample coefficients. Further, a refining filter may be applied to the pixel sample prior to performing inter-layer pixel prediction. The refining filter may have fixed refining coefficients or may have adaptive refining coefficients.

In accordance with the present disclosure, a pixel sample obtained from a base layer video frame may be accessed at an enhancement layer video encoder and inter-layer pixel prediction of at least a portion of an enhancement layer frame may be performed in response, at least in part, to the pixel sample. Performing inter-layer pixel prediction may include performing inter-layer pixel prediction in response, at least in part, to the pixel sample and to a residual. Further, the enhancement layer frame may be entropy encoded after performing inter-layer pixel prediction and a bitstream may be generated that includes the entropy encoded enhancement layer frame. The entropy encoded enhancement layer frame may include a residual.

In accordance with the present disclosure, an indicator may be generated, where, in a first state, the indicator specifies that inter-layer pixel prediction is to be performed for the portion of an enhancement layer frame, and where, in a second state, the indicator specifies that inter-layer pixel prediction is not to be performed for the portion of an enhancement layer frame. The indicator may then be placed in the bitstream. The indicator may be placed in one of the first state or the second state in response to a rate-distortion cost.

## Claims

1. A video decoder apparatus comprising:

   circuitry to selectively upsample chroma and luma samples of a base layer region regardless of whether inter-layer prediction is to be used to determine an enhancement layer region, wherein the enhancement layer region is to correspond to at least a portion of the base layer region and
   circuitry to selectively determine the enhancement layer region by use of inter-layer prediction based at least in part on a portion of the upsampled chroma and luma samples of the base layer region.

2. The apparatus of claim 1, wherein upsample chroma and luma samples of a base layer region comprises use of a multi-tap filter with fixed coefficients.

3. The apparatus of claim 1, comprising:

   circuitry to selectively determine the enhancement layer region by use of intra prediction and circuitry to selectively determine the enhancement layer region by use of inter prediction.

4. The apparatus of claim 1, comprising:

   circuitry to refine the upsampled chroma and luma samples.

**5.** The apparatus of claim 1, comprising:

circuitry to receive a bitstream portion, the bitstream portion comprising a flag to indicate whether to use inter-layer prediction to determine the enhancement layer region.

**6.** The apparatus of claim 5, wherein the bitstream portion comprises a residual and a flag to indicate whether to use the residual for determination of the enhancement layer region.

**7.** The apparatus of claim 6, wherein the circuitry to selectively determine the enhancement layer region by use of inter-layer prediction based at least in part on a portion of the upsampled chroma and luma samples of the base layer region is also to use the residual in response to the flag having an indication to use the residual for determination of the enhancement layer region.

**8.** The apparatus of claim 1, comprising:

a radio and
at least one antenna communicatively coupled to the radio.

**9.** The apparatus of claim 8, comprising:

one or more processor circuitry;
at least one memory communicatively coupled to the one or more processor circuitry; and
a display communicatively coupled to the one or more processor circuitry and the display to display an image based at least in part on the determined enhancement layer region.

**10.** The apparatus of any of claims 1-9, wherein the base layer region comprises a picture.

**11.** The apparatus of any of claims 1-9, wherein the enhancement layer region is to correspond to at least a portion of the base layer region comprises the enhancement layer region is co-located with at least a portion of the base layer region.

**12.** The apparatus of any of claims 1-9, wherein one or more of the circuitry comprises any or a combination of: software executed by one or more processors, hardware, or firmware.

**13.** A computer-implemented method comprising:

selectively upsampling chroma and luma samples of a base layer region regardless of whether inter-layer prediction is to be used to determine an enhancement layer region, wherein the enhancement layer region is to correspond to at least a portion of the base layer region and selectively determining the enhancement layer region by use of inter-layer prediction based at least in part on a portion of the upsampled chroma and luma samples of the base layer region.

**14.** The method of claim 13, wherein upsampling chroma and luma samples of a base layer region comprises using a multi-tap filtering technique involving fixed coefficients.

**15.** The method of claim 13, further comprising:

selectively determining the enhancement layer region by use of intra prediction and
selectively determining the enhancement layer region by use of inter prediction.

**16.** The method of claim 13, further comprising:

refining the upsampled chroma and luma samples.

**17.** The method of claim 13, further comprising:

receiving a bitstream portion, the bitstream portion comprising a flag to indicate whether to use inter-layer prediction to determine the enhancement layer region.

**18.** The method of claim 17, wherein the bitstream portion comprises a residual and a flag to indicate whether to use the residual for determining the enhancement layer region.

**19.** The method of claim 18, wherein determining the enhancement layer region by use of inter-layer prediction based at least in part on a portion of the upsampled chroma and luma samples of the base layer region is also based on the residual in response to the flag having an indication to use the residual for determining the enhancement layer region.

**20.** The method of any of claims 13-19, wherein the base layer region comprises a picture.

**21.** The method of any of claims 13-19, wherein the enhancement layer region is to correspond to at least a portion of the base layer region comprises the enhancement layer region is co-located with at least a portion of the base layer region.

**22.** At least one machine-readable storage including machine-readable instructions, when executed, to implement a method or realize an apparatus as claimed in any preceding claim.

## FIG. 1

**FIG. 2**

200

15

Begin

301

Perform inter-layer pixel prediction?

No

Yes

Determine co-located Base Layer (BL) block(s) corresponding to current Enhancement Layer (EL) coding unit (CU)    302

Access pixel samples from co-located BL block(s)    304

306

Upsample pixel samples?

No

Yes

Apply interpolation filter to pixel samples    308

310

Refine pixel samples?

No

Yes

Apply 2-dimensional spatial filter to pixel samples    312

Determine predicted pixel for EL CU based on pixel samples    314

Form bitstream for current EL CU    316

300

End

FIG. 3

SVC Codec
406

Processor
402

Memory
408

400

# FIG. 4

502

CU

504

EL input frame          206

BL input frame     208

# FIG. 5

Header Portion 602 — Data Portion 604

608

610

606

600

# FIG. 6

FIG. 7

Begin decoding
coding unit (CU)

Inter-layer pixel
prediction?

Yes

No

802

Skip mode?

No

Yes

804

Determine predicted
pixel based on pixel
samples obtained from
lower layer(s)   816

Intra or inter
prediction?

Inter

Intra

806

Residual
available?

No

Yes

Perform inter
prediction
810

Perform intra
prediction
808

818

Perform residual
decoding 812

Reconstruct pixel
value for CU
814

End

800

FIG. 8

900

950

Display 920

User Interface 922

Platform 902

Antenna

Memory 912

Radio 918

Storage 914

Applications 916

Chipset 905

Processor 910

Graphics Subsystem 915

Content Delivery Device(s) 940

Content Services Device(s) 930

Network 960

FIG. 9

FIG. 10

Europäisches
Patentamt

European
Patent Office

Office européen
des brevets

## EUROPEAN SEARCH REPORT

**Application Number**

EP 15 16 0628

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/104365 A1 (LG ELECTRONICS INC [KR]; JEON BYEONG MOON [KR]; PARK SEUNG WOOK [KR];) 5 October 2006 (2006-10-05) * abstract; figure 5 * * page 2, line 28 - page 13, line 32 * * claims 1-3, 18 * | 1-22 | INV. H04N19/176 H04N19/503 H04N19/117 H04N19/33 |
| X | WO 2008/007342 A2 (NOKIA CORP [FI]; WANG XIANGLIN [US]; RIDGE JUSTIN [US]) 17 January 2008 (2008-01-17) * paragraph [0035] - paragraph [0040]; figures 1,6 * | 1-22 | |
| X | US 2007/237228 A1 (HAN WOO-JIN [KR] ET AL) 11 October 2007 (2007-10-11) * paragraph [0009] - paragraph [0011] * * paragraph [0009] * | 1-22 | |
| A | WO 2010/123862 A1 (DOLBY LAB LICENSING CORP [US]; YE YAN [US]; PAHALAWATTA PESHALA V [US]) 28 October 2010 (2010-10-28) * paragraph [0043] * | 1-22 | TECHNICAL FIELDS SEARCHED (IPC) H04N |

The present search report has been drawn up for all claims

| Place of search | Date of completion of the search | Examiner |
|---|---|---|
| Munich | 10 June 2015 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 15 16 0628

This annex lists the patent family members relating to the patent documents cited in  the above-mentioned European search report.
The members are as contained in the European Patent Office EDP file on
The European Patent Office is in no way liable for these particulars which are merely given for the purpose of information.

10-06-2015

| Patent document cited in search report | | Publication date | Patent family member(s) | | Publication date |
|---|---|---|---|---|---|
| WO 2006104365 | A1 | 05-10-2006 | EP | 1878249 A1 | 16-01-2008 |
| | | | KR | 20080013880 A | 13-02-2008 |
| | | | WO | 2006104365 A1 | 05-10-2006 |
| WO 2008007342 | A2 | 17-01-2008 | CN | 101755458 A | 23-06-2010 |
| | | | EP | 2041979 A2 | 01-04-2009 |
| | | | KR | 20090037918 A | 16-04-2009 |
| | | | TW | 200820785 A | 01-05-2008 |
| | | | US | 2008056356 A1 | 06-03-2008 |
| | | | WO | 2008007342 A2 | 17-01-2008 |
| US 2007237228 | A1 | 11-10-2007 | CN | 101467461 A | 24-06-2009 |
| | | | EP | 2008469 A1 | 31-12-2008 |
| | | | JP | 4922391 B2 | 25-04-2012 |
| | | | JP | 2009533938 A | 17-09-2009 |
| | | | KR | 20070101088 A | 16-10-2007 |
| | | | US | 2007237228 A1 | 11-10-2007 |
| | | | WO | 2007117090 A1 | 18-10-2007 |
| WO 2010123862 | A1 | 28-10-2010 | CN | 102598660 A | 18-07-2012 |
| | | | EP | 2422520 A1 | 29-02-2012 |
| | | | JP | 5416271 B2 | 12-02-2014 |
| | | | JP | 2012521735 A | 13-09-2012 |
| | | | US | 2012027079 A1 | 02-02-2012 |
| | | | WO | 2010123862 A1 | 28-10-2010 |

EPO FORM P0459